# EUROPEAN PATENT APPLICATION

(11) **EP 1 887 827 A1**
(43) Date of publication of application: **13.02.2008**
(21) Application number: 06746668.0
(22) Date of filing: 19.05.2006
(51) Int. Cl.: H04Q 7/38, G06F 13/00, G06K 17/00, H04B 7/26, H04L 12/56

(54) **CONTROLLABLE TERMINAL IN CENTRAL CONTROL SYSTEM AND CENTRAL CONTROL SYSTEM**

(30) Priority: 02.06.2005 JP 2005162410
(71) Applicant: Sanden Corporation, Isesaki-shi, Gunma 372-8502 (JP)
(72) Inventor: SATO, Masaaki, c/o SANDEN CORPORATION, Isesaki-shi, Gunma 372-8502 (JP)
(74) Representative: Haley, Stephen
(86) International application number: PCT/JP2006/310061
(87) International publication number: WO 2006/129503

(57) **Abstract**

A content providing device 10 includes: a second communication device 16 transmitting and receiving data with a mobile phone 40 having a connection function to a second network 50; and a control device 18 requesting the mobile phone 40 to receive content as a substitute by using the second communication device 16, and receiving the content from the mobile phone 40 which has received the content from a content control server 30 in response to the request when it is failed to receive the content from the content control server 30 through a first network 20 by using a first communication device 11.

## Description

### Technical field

The present invention relates to such a centralized control system that a control computer centrally controls a terminal such as a multi-media terminal, a kiosk terminal, an automatic vending machine, a showcase, and a parking fee paying machine through a network, specifically, to a controlled terminal, target to be controlled, in the centralized control system.

### Background art

As this kind of centralized control system, a system is known which controls a multi-media terminal, a kiosk terminal, an automatic vending machine, a showcase, and a parking fee paying machine. Here, a control system of a content providing device will be described. This kind of content providing device may be also referred to as a multi-media terminal and a kiosk terminal. A device described in Patent Document 1 is, for example, known as a conventional content providing device. This content providing device is a device which provides content such as image and music to a user, and is installed at a shop such as a convenience store, a station premise, etc. The content providing device described in Patent Document 1 includes a communication device for connecting with a network, a storage device which stores a variety of contents received from a prescribed server through the network, and a display device such as a CRT for displaying content. When a user requests for displaying content, the content providing device displays the content related to the request on the display device, and displays a prescribed content such as a commercial image on the display device when a user does not operates for a certain period of time. The content providing device receives a variety of contents together from a server to store them in a storage unit periodically or according to an instruction of an administrator. In addition, when content related to a display request from a user is not in a storage unit, the content providing device receives the content from a server according to the request.
Patent Document 1: Japanese Patent Publication 2003-67622

### Disclosure of the invention

### Problems to be solved by the invention

However, when communication failure was induced, a conventional content providing device might not be able to receive content necessary for providing service from a server, and obstruct the service provision. The communication failure refers to, for example, failure of a communication device, break and disappearance of setting information for communication, network failure, etc.

The present invention has been performed in consideration of the above circumstance, and the purpose of the present invention is to provide a controlled terminal which is highly tolerant of communication failure in a centralized control system.

### Means for solving the problems

To achieve the above purpose, the present invention proposes a controlled terminal centrally controlled by a control computer, including: a first communication device connecting to a first network; a second communication device transmitting and receiving data with a mobile communication terminal having a connection function to a second network; and a control device which requests the mobile communication terminal to communicate as a substitute by using the second communication device, and receives a communication message received from the control computer according to the request from the mobile communication terminal when it is failed to communicate with the control computer through the first network by using the first communication device.

According to the present invention, even if it is failed to communicate with the control computer through the first network by using the first communication device, it is possible to request the mobile communication terminal to communicate as a substitute by using the second communication device, and receive a communication message which the mobile communication terminal has communicated as a substitute with the control computer from the mobile communication terminal. That is, even if it is failed to communicate through the first communication device and the first network, it is possible to communicate with a communication means of another path through the mobile communication terminal. Meanwhile, the mobile communication terminal can be any one of a mobile communication terminal which an administrator of the controlled terminal has or a mobile communication terminal which a user of the controlled terminal has.

In the controlled terminal of the above centralized control system, the present invention proposes that the control device requests the mobile communication terminal by using the second communication device to notify the control computer of such a fact that the control computer connects to the controlled terminal, and accepts a connection request from the control computer in response to the request to communicate with the control computer when it is failed to connect to the control computer through the first network by using the first communication device.

One of causes for communication failure between the controlled terminal and the control computer through the first communication device and the first network refers to such a case that there is any defect in setting information, etc. for the controlled terminal side to connect to the control computer while there is not any failure in the hardware of the first communication device and the first network. In such a case, the control computer side may connect to the controlled terminal even if the controlled terminal side can not connect to the control computer. According to the present invention, in such a case, the controlled terminal notifies the control computer through the mobile communication terminal to connect to the controlled terminal. Then, the control computer connects to the controlled terminal in response to the notice. Thus, even in case of such a communication failure, the controlled terminal can secure a communication path with the control computer to communicate with the control computer.

Meanwhile, a variety of communication embodiments may be used between the controlled terminal and the mobile communication terminal. For example, the second communication device refers to a reader/writer device which reads and writes data without contacting to an IC chip installed in the mobile communication terminal.

### Advantages of the invention

As described above, according to the present invention, even if it is failed to communicate with the control computer through the first network by using the first communication device, it is possible to request the mobile communication terminal to communicate as a substitute by using the second communication device, and receive from the mobile communication terminal a communication message which the mobile communication terminal has communicated as a substitute with the control computer. That is, even if it is failed to communicate through the first communication device and the first network, it is possible to communicate with a communication means of another path through the mobile communication terminal.

### Brief description of the drawings

Figure 1 is a network diagram including a content providing device;
Figure 2 is a functional configuration diagram of the content providing device;
Figure 3 is a functional configuration diagram of a mobile phone;
Figure 4 is a functional configuration diagram of a content providing server;
Figure 5 is a flowchart in case that content selected by a user is received from a content control server;
Figure 6 is a flowchart in case that new content is received from the content control server periodically or based on an instruction input from an administrator; and
Figure 7 is a flowchart in case that new content is received from the content control server periodically or based on an instruction input from an administrator.

### Description of symbols

- 10: content providing device
- 11: modem
- 12: content storage unit
- 13: display device
- 14: speaker
- 15: input device
- 16: reader/writer
- 17: setting information storage unit
- 18: control device
- 20: first network
- 30: content control server
- 31: content storage unit
- 32: application storage unit
- 33: communication control unit
- 40: mobile phone
- 41: communication control unit
- 42: JAVA application execution environment
- 43: non-contact-type IC chip
- 44: content control application
- 50: second network

### Best mode for carrying out the invention

### (First exemplary embodiment)

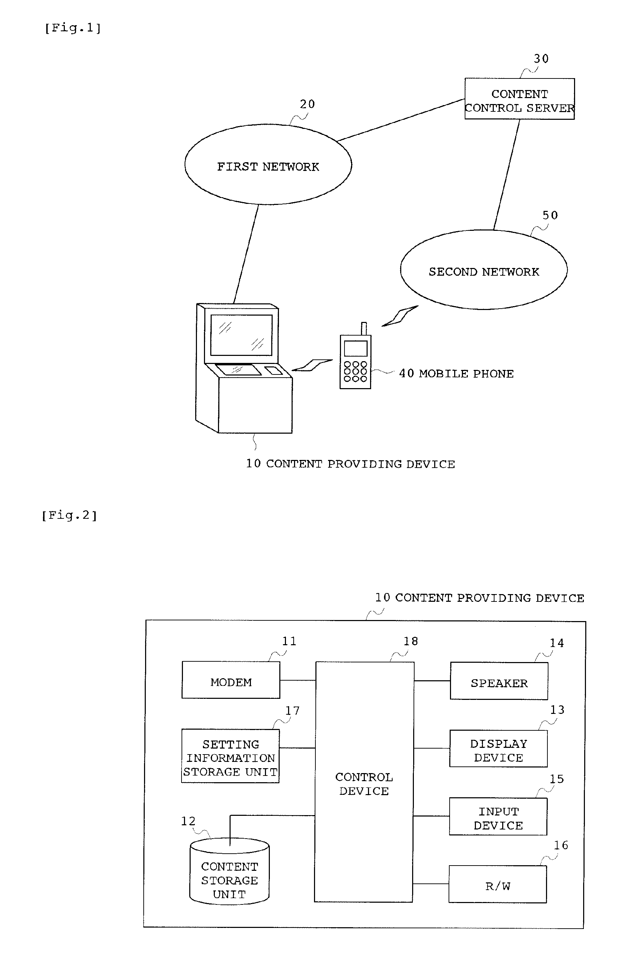

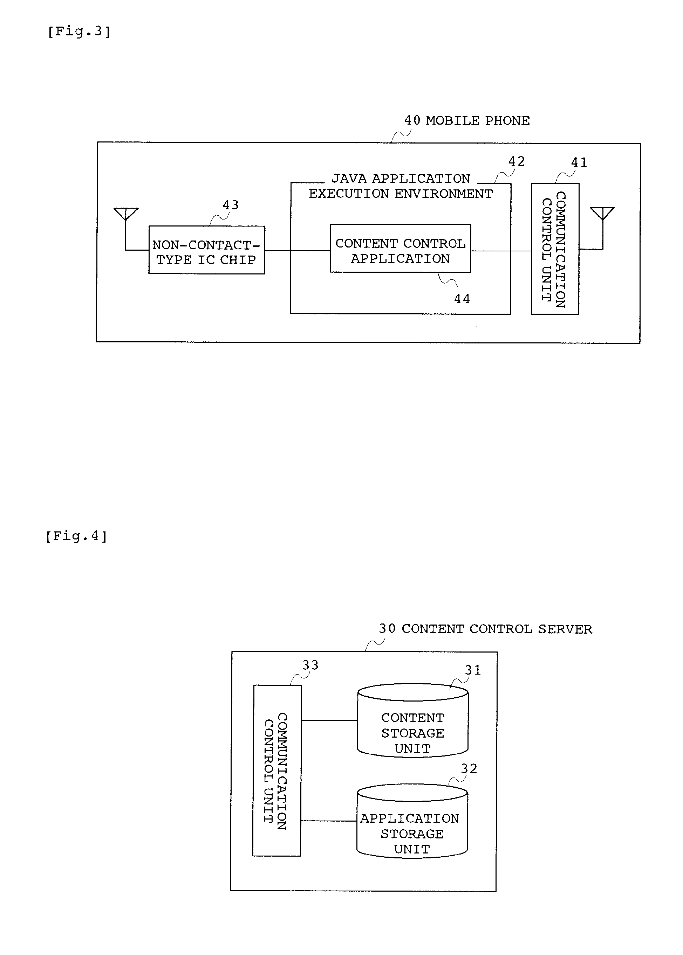

A centralized control system according to a first exemplary embodiment of the present invention will be described referring to drawings. In the first exemplary embodiment, as one example of the centralized control systems, such a system will be described that a content providing server centrally controls many content providing devices installed in a shop, etc. Figure 1 is a network diagram including the content providing device, Figure 2 is a functional configuration diagram of the content providing device, Figure 3 is a functional configuration diagram of a mobile phone, and Figure 4 is a functional configuration diagram of the content providing server.

A content providing device 10 is a controlled terminal controlled by a content providing device. As illustrated in Figure 1, the content providing device 10 can communicate with a content control server 30 through a first network 20, and displays a variety of contents received from the content control server 30. If some failure is induced in communication with the content control server 30 through the first network 20, the content providing device 10 receives content from the content control server 30 through a second network 50. The content through the second network 50 is received by using a mobile phone 40 carried by a user or an administrator. An important point is that a communication path between the content providing device 10 and the content control server 30 is not identical to a communication path between the mobile phone 40 and the content control server 30. However, a part of the communication path may be a common network. In the first exemplary embodiment, as the first network 20, such the Internet is used that ADSL (Asymmetric Digital Subscriber Line) is used as connection medium. As the second network 50, a packet communication network and the Internet are used which are provided by a provider of the mobile phone 40.

A configuration of the content providing device 10 will be described referring to Figure 2. As illustrated in Figure 2, the content providing device 10 includes a modem 11, a content storage unit 12, a display device 13, a speaker 14, an input device 15, a reader/writer 16, a setting information storage unit 17, and a control device 18 controlling these units and devices. The modem 11 is a communication means for connecting to the first network 20. The content storage unit 12 stores a variety of contents received from the content control server 30. The display device 13 comprises CRT or LCD, etc., and displays content received from the content control server 30. The speaker 14 outputs voice signal of content, operation sound and alarm sound. The input device 15 comprises a touch panel, a key board or mouse, etc., and inputs a variety of information on selection of content by a user, etc. The reader/writer 16 reads and writes data in a non-contact mode with a non-contact-type IC chip (described below) installed in the mobile phone 40. The setting information storage unit 17 stores the setting information necessary for connecting to the content control server 30, a terminal number which is information for uniquely identifying itself, etc.

A configuration of the mobile phone 40 will be described referring to Figure 3. As illustrated in Figure 3, the mobile phone 40 includes: a communication control unit 41 which has a data communication function and connects to the second network 50; a JAVA (registered trademark) application execution environment 42; and a non-contact-type IC chip 43 which can communicate in a non-contact mode with the reader/writer 16 of the content providing device 10. A content control application 44 which receives content as a substitute of the content providing device 10 is stored in the JAVA application execution environment 42. This content control application 44 can be initiated by such an operation that an outside reader/writer issues a prescribed instruction to the non-contact-type IC chip 43. And, this content control application 44 is downloaded from the content control server 30. CPU, memory, and RF circuit, etc. are integrated in the non-contact-type IC chip 43. The memory of the non-contact-type IC chip 43 stores a member number which is information for uniquely identifying a user or an administrator.

Next, a configuration of the content control server 30 will be described referring to Figure 4. As illustrated in Figure 4, the content control server 30 includes: a content storage unit 31 storing content delivered to the content providing device 10; an application storage unit 32 storing the content control application 44 delivered to the mobile phone 40; and a communication control unit 33 delivering content according to a content delivery request from the content providing device 10 or the mobile phone 40.

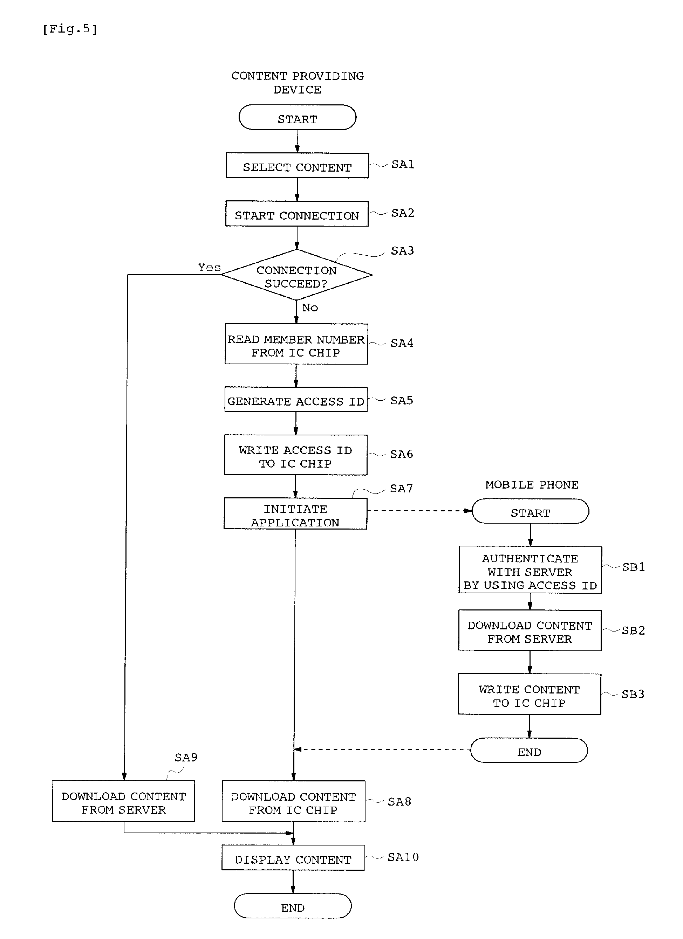

Next, operations of the content providing device 10 and the mobile phone 40 will be described referring to the drawings. First, the case that content selected by a user is received (downloaded) from the content control server 30 is described referring to a flowchart of Figure 5.

When a user selects content which it likes to view from the input device 15 (step SA1), the control device 18 of the content providing device 10 starts a connection processing to the content control server 30 by using the modem 11 (step SA2). If this connection processing succeeds (step SA3), the control device 18 receives content from the content control server 30 by using the modem 11 to store it in the content storage unit 12 (step SA9).

On the other hand, if it is failed to receive content from the content control server 30 by using the modem 11 (step SA3), the control device 18 executes the following processing to receive content through the mobile phone 40. First, the control device 18 read a member number of a user from the non-contact-type IC chip 43 of the mobile phone 40 of the user by using the reader/writer 16 (step SA4). Next, the control device 18 generates information (here, referred to as [access ID]) necessary for receiving content (step SA5). This access ID includes: identification information of the content selected at the step SA1; address information of the content control server 30 stored in the setting information storage unit 17; a terminal number of the content providing device 10; and the member number of a user read at the step SA4. Next, the control device 18 writes the access ID to the non-contact-type IC chip 43 of the mobile phone 40 (step SA6). Next, the control device 18 issues an instruction to the non-contact-type IC chip 43 of the mobile phone 40 so as to initiate the content control application 44 (step SA7). Thereby, the content control application 44 of the mobile phone 40 is initiated.

The content control application 44 connects to the server 30 based on address information of the content control server 30 included in the access ID written in the non-contact-type IC chip 43, and executes an authentication processing (step SB1). Such an authentication processing includes: a step of authenticating the validity of the content providing device 10 by using a terminal number of the content providing device 10 included in the access ID; and a step of authenticating the validity of a user by using a member number of the user included in the access ID. Next, the content control application 44 receives content specified by identification information from the content control server 30 by using the identification information of content included in the access ID (step SB2). Next, the content control application 44 stores the received content in a memory of the non-contact-type IC chip 43 (step SB3).

The control device 18 of the content providing device 10 reads content from the non-contact-type IC chip 43 by using the reader/writer 16 to store it in the content storage unit 12 (step SA8). The content selected at the step SA1 is being stored in the content storage unit 12 with processing of this step SA8 or the step SA9. The control device 18 displays the content stored in the content storage unit 12 on the display device 13 (step SA10).

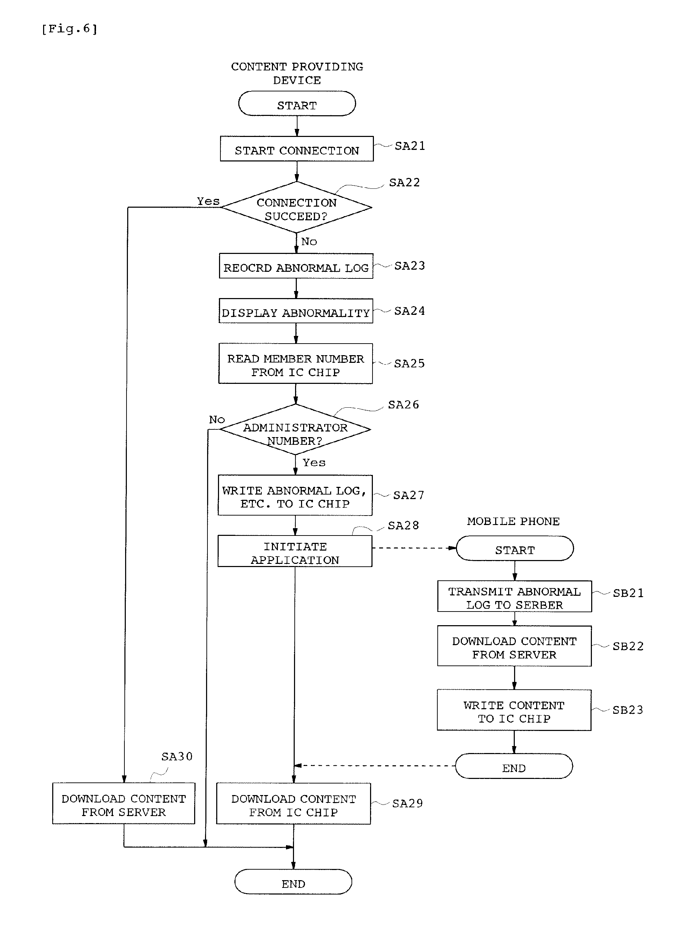

Next, such a case will be described referring to a flowchart of Figure 6 that the content providing device 10 receives (downloads) new content from the content control server 30 periodically or based on an instruction input from an administrator.

When the prescribed time comes or an instruction for receiving is inputted from an administrator, the control device 18 of the content providing device 10 starts a connection processing to the content control server 30 by using the modem 11 (step SA21). If this connection processing succeeds (step SA22), the control device 18 receives new content from the content control server 30 by using the modem 11 to store it in the content storage unit 12 (step SA30).

On the other hand, if it is failed to receive content from the content control server 30 by using the modem 11 (step SA22), the control device 18 executes the following processing to receive content through the mobile phone 40. First, the control device 18 records such a fact as an abnormal log in a prescribed storage unit that it has been failed to receive content (step SA23). Next, the control device 18 displays the occurrence of abnormality on the display device 13 to notify an administrator of the occurrence of abnormality (step SA24). Next, the control device 18 reads a member number of an administrator from the non-contact-type IC chip 43 of the mobile phone 40 of the administrator by using the reader/writer 16 (step SA25). The control device 18 confirms whether the member number belongs to the administrator (step SA26). If the member number does not belong to the administrator, the control device 18 terminates the processing. On the other hand, if the member number belongs to the administrator, the control device 18 writes the abnormal log and the address information of the content control server 30 to the non-contact-type IC chip 43 of the mobile phone 40 (step SA27). Next, the control device 18 issues an instruction to the non-contact-type IC chip 43 of the mobile phone 40 so as to initiate the content control application 44 (step SA28). Thereby, the content control application 44 of the mobile phone 40 is initiated.

The content control application 44 connects to the server 30 based on the address information of the content control server 30 which has been written in the non-contact-type IC chip 43 to transmit the abnormal log written in the non-contact-type IC chip 43 (step SB21). Next, the content control application 44 receives new content from the content control server 30 (step SB22) to store the received content in a memory of the non-contact-type IC chip 43 (step SB23).

The control device 18 of the content providing device 10 reads content from the non-contact-type IC chip 43 by using the reader/writer 16 to store it in the content storage unit 12 (step SA29).

As described above, in a content providing device according to the first exemplary embodiment, even if it is failed to receive content from the content control server 30 by using the modem 11 installed in itself, the content can be received through the mobile phone 40. Thus, the content providing device becomes to be excellent in communication failure-tolerance.

### (Second exemplary embodiment)

A centralized control system according to a second exemplary embodiment of the present invention will be described referring to drawings. In the second exemplary embodiment, as one example of the centralized control systems, as in the first exemplary embodiment, such a system will be described that a content providing server centrally controls many content providing devices installed in a shop, etc.

The different point between the content providing device according to the second exemplary embodiment and that of the first exemplary embodiment is to use the first network 20 as a path for receiving content. This is useful when it is failed to connect from the content providing device 10 to the content control server 30, but it is possible to connect from the content control server 30 to the content providing device 10. The configurations of the content providing device 10 and the mobile phone 40 are same as that of the first exemplary embodiment. Here, only the different points from the first exemplary embodiment will be described for the operations of the content providing device 10 and the mobile phone 40.

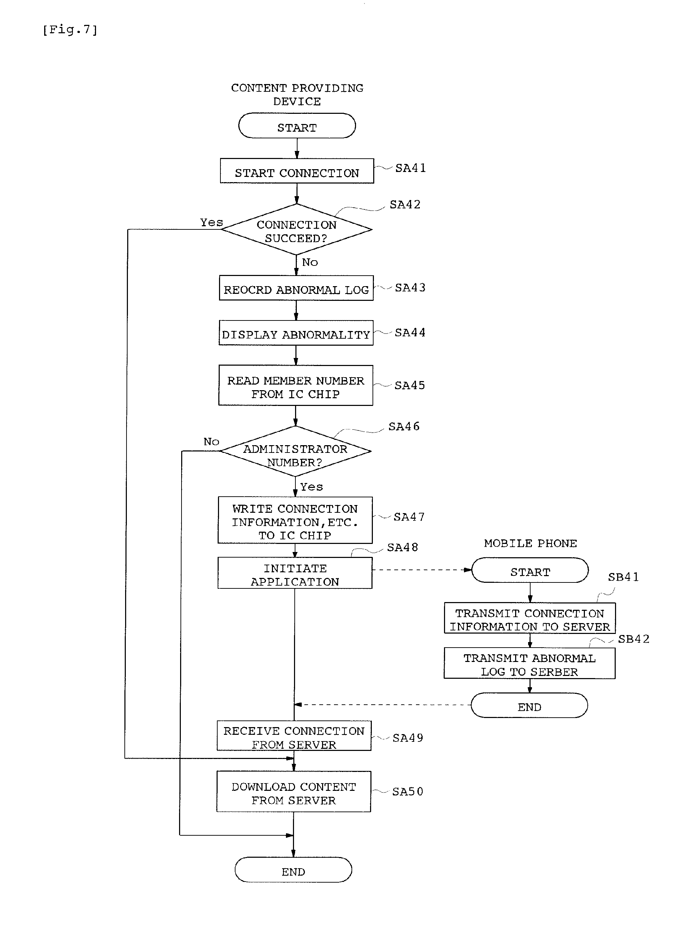

Such a case will be described referring to a flowchart of Figure 7 that the content providing device 10 receives (downloads) new content from the content control server 30 periodically or based on an instruction input from an administrator.

When the prescribed time comes or an instruction for receiving is inputted from an administrator, the control device 18 of the content providing device 10 starts a connection processing to the content control server 30 by using the modem 11 (step SA41). If this connection processing succeeds (step SA42), the control device 18 receives new content from the content control server 30 by using the modem 11 to store it in the content storage unit 12 (step SA50).

On the other hand, if it is failed to receive content from the content control server 30 by using the modem 11 (step SA42), the control device 18 executes the following processing to request the content control server 30 to connect to the content providing device 10 through the mobile phone 40. First, the control device 18 records such a fact as an abnormal log in a prescribed storing means that it has been failed to receive content (step SA43). Next, the control device 18 displays the occurrence of abnormality on the display device 13 to notify an administrator of the occurrence of abnormality (step SA44). Next, the control device 18 reads a member number of the administrator from the non-contact-type IC chip 43 of the mobile phone 40 of the administrator by using the reader/writer 16 (step SA45). The control device 18 confirms whether the member number belongs to the administrator (step SA46). If the member number does not belong to the administrator, the control device 18 terminates the processing. On the other hand, if the member number belongs to the administrator, the control device 18 writes the abnormal log, address information of the content control server 30, and setting information (for example, address information, etc.) necessary for connecting to the content providing device 10 to the non-contact-type IC chip 43 of the mobile phone 40 (step SA47). Next, the control device 18 issues an instruction to the non-contact-type IC chip 43 of the mobile phone 40 so as to initiate the content control application 44 (step SA48). Thereby, the content control application 44 of the mobile phone 40 is initiated.

The content control application 44 connects to the server 30 based on the address information of the content control server 30 which has been written in the non-contact-type IC chip 43 to transmit the abnormal log written in the non-contact-type IC chip 43 (step SB41). Next, the content control application 44 transmits a connection request to the content control server 30 (step SB42). This connection request is a request for connecting from the content control server 30 to the content providing device 10 through the first network 20. In addition, this connection request includes the setting information written in the non-contact-type IC chip 43. When receiving the connection request from the mobile phone 40, the content control server 30 connects to the content providing device 10.

In response to the connection request of the step SB42, the connection request from the content control server 30 arrives at the modem 11 in the content providing device 10. The control device 18 of the content providing device 10 receives the connection request from the content control server 30, and builds up a communication path between the content providing device 10 and the content control server 30 (step SA49). The control device 18 of the content providing device 10 receives new content from the content control server 30 by using the modem 11 to store it in the content storage unit 12 (step SA50).

As described above, in the content providing device according to the second exemplary embodiment, when it has been failed to connect from the content providing device 10 to the content control server 30, but it is possible to connect from the content control server 30 to the content providing device 10, a communication path between the content providing device 10 and the content control server 30 is built up with the connection. Thus, as compared with the first exemplary embodiment, the mobile phone 40 need not receive content, so that it is preferable from viewpoint of communication fee and communication rate. Other effects are same as that of the first exemplary embodiment.

Meanwhile, in the second exemplary embodiment, while such a case has been described that the content providing device 10 receives (downloads) new content from the content control server 30 periodically or based on an instruction input from an administrator, the same processing may be executed even in case that content selected by a user is received (downloaded) from the content control server 30.

While exemplary embodiments of the present invention have been described in detail above, the present invention is not limited to such exemplary embodiments. For example, a content receiving method according to the above first exemplary embodiment and a content receiving method according to the second exemplary embodiment may be used at the same time.

In the content control application 44 or the content control server 30, the information on charge necessary for communication by using the mobile phone 40 may be recorded, and the charge information may be transmitted to a provider of the mobile phone 40. Thereby, not an owner of the mobile phone 40, but an operator of the content providing device 10 can settle the charge.

Furthermore, in each of above exemplary embodiments, while the non-contact-type IC chip is used as a communication path between the content providing device 10 and the mobile phone 40, another means may be used. For example, a wireless communication device with the standard referred to as Bluetooth or an infrared communication device with the standard referred to as IrDA may be used.

Furthermore, in each of above exemplary embodiments, while such a case has been exemplified that communication failure is induced when content is received, the present invention may be also applied in case of another communication. For example, the present invention may be also applied in case that a report such as play history is transmitted from the content providing device 10 to the content control server 30.

Furthermore, in each of above exemplary embodiments, while a centralized control system of a content providing device is exemplified as a centralized control system, the present invention may be also applied in another centralized control system. For example, the centralized control system refers to an automatic vending machine, a showcase, and a parking fee paying machine.

Furthermore, in each of above exemplary embodiments, while the mobile phone 40 is exemplified as a mobile communication terminal owned by a user or an administrator, the present invention may be also implemented for another mobile communication terminal such as a small computer and PDA having a communication function.

## Claims

1. A controlled terminal centrally controlled by a control computer in a centrally controlled system, comprising:
a first communication device connected to a first network;
a second communication device transmitting and receiving data with a mobile communication terminal having a connection function to a second network; and
a control device,
wherein when it is failed to communicate with the control computer through the first network by using the first communication device, the control device requests the mobile communication terminal to communicate as a substitute by using the second communication device, and receives a communication message received from the control computer through the mobile communication terminal in response to the request.

2. The controlled terminal in the centrally controlled system according to claim 1, wherein:
when it is failed to connect to the control computer through the first network by using the first communication device, the control device requests the mobile communication terminal by using the second communication device to notify the control computer of the fact that the control computer connects to the controlled terminal, and receives a connection request from the control computer in response to the request to communicates with the control computer.

3. The controlled terminal in the centrally controlled system according to claim 1 or 2, wherein:
the second communication device comprises a reader/writer reading and writing data in a non-contact mode for an IC chip installed in the mobile communication terminal.

4. The controlled terminal in the centrally controlled system according to any one of claims 1 to 3, comprising:
a storage device receiving content from the control computer to store the content; and
an output device outputting the content stored in the storage device.

5. A centrally controlled system, comprising:
a control computer;
a controlled terminal; and
a mobile communication terminal; wherein:
the controlled terminal comprises a first communication device connecting to a first network; and a second communication device transmitting and receiving data with the mobile communication terminal,
when it is failed to communicate with the control computer through the first network by using the first communication device, the controlled terminal requests the mobile communication terminal to communicate as a substitute by using the second communication device,
the mobile communication terminal communicates with the control computer through a second network as a substitute of the controlled terminal in response to the request, and transmits a communication message received from the control computer to the mobile communication terminal, and
the controlled terminal receives the communication message from the mobile communication terminal by using the second communication device.

6. The centrally controlled system according to claim 5, wherein:
when it is failed to connect to the control computer through the first network by using the first communication device, the controlled terminal requests the mobile communication terminal to transfer a connection request by using the second communication device,
the mobile communication terminal transfers the connection request to the control computer through the second network in response to the request,
the control computer starts a connection to the controlled terminal through the first network in response to the connection request received from the mobile communication terminal, and
the controlled terminal receives the connection request from the control computer to build up a communication path with the control computer.
